# FASCICULE DE BREVET EUROPEEN

(11) **EP 3 057 820 B1**
(45) Date de publication et mention de la délivrance du brevet: **29.04.2020**
(21) Numéro de dépôt: 14793233.9
(22) Date de dépôt: 01.10.2014
(51) Int. Cl.: B60K 23/02

(54) **DISPOSITIF DE COMMANDE HYDRAULIQUE D'UN EMBRAYAGE ET VÉHICULE ASSOCIÉ**
VORRICHTUNG ZUR HYDRAULISCHEN STEUERUNG EINER KUPPLUNG UND FAHRZEUG DAMIT
DEVICE FOR HYDRAULIC CONTROL OF A CLUTCH AND ASSOCIATED VEHICLE

(30) Priorité: 16.10.2013 FR 1360056
(43) Date de publication de la demande: 24.08.2016
(73) Titulaire: Renault s.a.s, 92100 Boulogne-Billancourt (FR)
(72) Inventeur: JANIER, Benoit, F-92370 Chaville (FR); BLONDEAU, Vincent, F-28000 Chartres (FR)
(86) Numéro de dépôt international: PCT/FR2014/052487
(87) Numéro de publication internationale: WO 2015/055913

(56) Documents cités:
- EP-A1- 2 522 873
- DE-A1- 19 622 572

## Description

L'invention concerne un dispositif de commande hydraulique d'un embrayage, en particulier pour véhicule automobile. Le document EP2522873 A1 divulgue un tel dispositif.

Un véhicule comporte un moteur relié à une boîte de vitesses par l'intermédiaire d'un embrayage, qui peut être actionné à l'aide d'une commande hydraulique, de façon à coupler, c'est-à-dire embrayer ou découpler, c'est-à-dire débrayer le moteur de la boîte de vitesses.

Un dispositif de commande hydraulique comporte classiquement un maître-cylindre commandé par une pédale d'embrayage, le maitre-cylindre étant relié par une conduite à un cylindre récepteur d'actionnement de l'embrayage. La commande comprend aussi des moyens d'alimentation du maître-cylindre en fluide hydraulique, généralement un réservoir contenant un liquide de frein.

L'actionnement du maître-cylindre par appui sur la pédale d'embrayage provoque le déplacement du fluide hydraulique sous pression dans la conduite jusqu'au cylindre récepteur qui exerce alors un effort sur une fourchette d'embrayage, la fourchette d'embrayage actionnant une butée d'embrayage qui appuie sur des moyens de débrayage, de façon à désaccoupler le moteur de la boîte de vitesses.

Lorsque le conducteur relâche la pédale d'embrayage, le maître-cylindre n'exerce plus de pression sur le fluide hydraulique. Le cylindre récepteur retrouve alors sa position d'origine et le fluide hydraulique est renvoyé vers le maître-cylindre. Un dispositif de commande hydraulique de ce type est par exemple connu du document DE 195 00 998.

Bien qu'un tel dispositif soit globalement étanche, on constate tout de même qu'en fonctionnement, des bulles d'air s'introduisent dans le fluide hydraulique, en général par le cylindre récepteur.

Or, les bulles d'air présentes dans le cylindre récepteur ou piégées dans le fluide de la conduite empêchent le bon fonctionnement du dispositif de commande hydraulique. En effet, lorsqu'un conducteur appuie sur la pédale d'embrayage et actionne de ce fait le maître-cylindre, l'air est comprimé et le déplacement du maître-cylindre n'est alors transmis que partiellement au cylindre récepteur, ce qui peut empêcher le débrayage et provoquer dans les cas extrêmes une panne conduisant à l'immobilisation du véhicule.

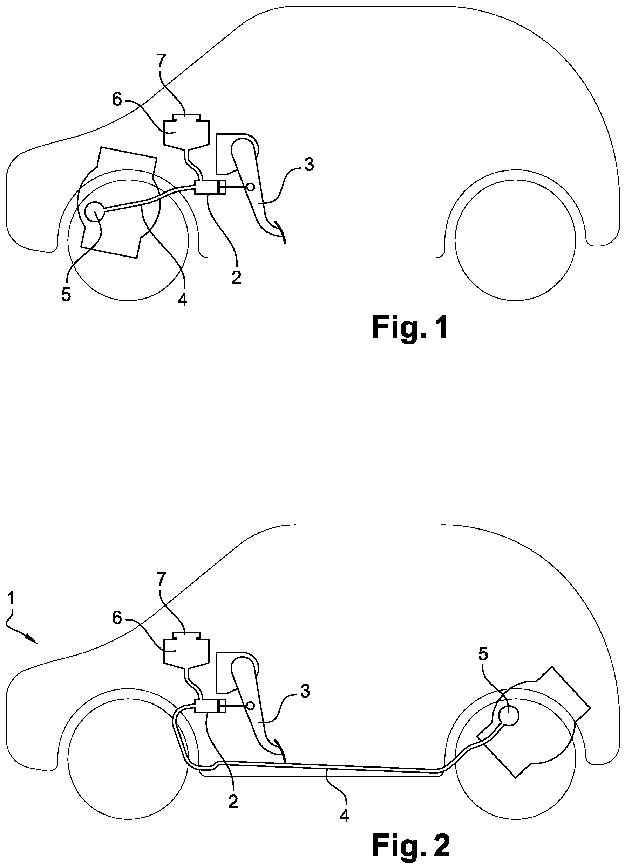

Sur les véhicules usuels avec un groupe motopropulseur placé à l'avant, comme visible sur la figure 1, le maître-cylindre 2 est disposé habituellement en un point situé plus haut que le cylindre récepteur 5, afin que les bulles provenant du cylindre récepteur remontent naturellement dans le maître-cylindre où elles sont ensuite évacuées vers le réservoir 7 de liquide de frein 6. En outre la longueur des conduites 4 est faible.

Ce n'est pas le cas pour les véhicules avec groupe motopropulseur à l'arrière, qui présentent notamment une conduite hydraulique plus longue allant de l'avant du véhicule à l'arrière, ce qui augmente la possibilité d'avoir des bulles dans le conduit et rend de plus difficile, de par la longueur de la conduite, leur évacuation vers le maitre-cylindre, puis le réservoir. Il convient alors de trouver une solution au problème de l'évacuation des bulles d'air dans les conduites.

L'invention a notamment pour but d'apporter une solution simple, efficace et économique à ce problème.

A cet effet, l'invention propose un dispositif de commande hydraulique d'un embrayage pour véhicule automobile, comportant toutes les caractéristiques de la revendication 1.

Les bulles d'air sont piégées par les dispositifs de désaxage de conduites et elles sont évacuées lors du fonctionnement de l'embrayage en remontant progressivement le long de la conduite, grâce à la pluralité des dispositifs de désaxage de conduites, jusque dans le réservoir de liquide de frein. Il n'est ainsi pas nécessaire d'avoir des dispositifs couteux, tels une étape de purge distincte, avec notamment des équipements additionnels de purge supplémentaires, par exemple des pompes de purge, ou par exemple des circuits additionnels de conduites séparées aller et retour.

Dans des formes de réalisation préférées de l'invention, on a en outre recours à l'une et/ou à l'autre des dispositions suivantes prises seules ou en combinaison:
- Les deux portions tubulaires du dispositif de désaxage communiquent au moyen d'un évidement commun réalisé dans une partie inférieure de l'enveloppe de la portion tubulaire amont et dans la partie supérieure de l'enveloppe de la portion tubulaire aval, au travers duquel circule le fluide hydraulique.
- L'évidement présente une largeur supérieure ou égale à la somme des rayons des portions tubulaires amont et aval.
- La conduite hydraulique comporte au moins deux dispositifs de désaxages successifs dans un même plan longitudinal du véhicule, le dispositif de désaxage situé à proximité de la pédale étant plus haut que le dispositif situé à proximité du cylindre récepteur..
- Le dispositif de commande hydraulique d'un embrayage pour véhicule automobile comprend au moins trois dispositifs de désaxages successifs.
- Le dispositif de commande hydraulique d'un embrayage pour véhicule automobile comprend au moins quatre dispositifs de désaxages successifs.
- La portion de conduite reliant deux dispositifs de désaxages successifs. comprend un volume de fluide hydraulique compris entre 70 et 90 % du volume de fluide hydraulique déplacé lors de l'appui de la pédale.
- Une longueur de portion de conduite entre deux modules de désaxage successifs est comprise entre 400mm et 600 mm.

L'invention concerne également un véhicule automobile, comportant un embrayage actionné par un dispositif de commande hydraulique du type précité.

L'invention sera mieux comprise et d'autres caractéristiques et avantages de l'invention apparaîtront au cours de la description suivante faite à titre d'exemple non limitatif d'une ou de plusieurs de ses formes de réalisation, en référence aux dessins annexés dans lesquels :
- La figure 1 est une vue schématique d'un véhicule automobile comportant un embrayage actionné par un dispositif de commande hydraulique de l'art antérieur,
- La figure 2 est vue schématique d'un véhicule automobile comportant un embrayage actionné par un dispositif selon l'invention,
- La figure 3 est une vue de détail schématique de la conduite du dispositif hydraulique selon l'invention.
- La figure 4 est une vue de détail d'un dispositif de désaxage composant l'invention
- La figure 5 est une vue d'ensemble du dispositif de commande hydraulique selon l'invention

Dans le contexte de la présente demande, les termes « avant », « arrière », « gauche », « droite », s'entendent en référence à un repère usuel des véhicules automobiles comprenant un premier axe longitudinal X, horizontal et orienté de l'arrière vers l'avant, un axe transversal Y et un axe vertical Z dirigé du bas vers le haut. Les axes X, Y définissent un plan horizontal.

Par ailleurs, sur les différentes figures, les mêmes références désignent des éléments identiques ou similaires.

La figure 2 représente un véhicule automobile comportant un moteur situé en partie arrière du véhicule, relié à une boîte de vitesses par l'intermédiaire d'un embrayage (non représentés). L'embrayage est actionné par un dispositif de commande hydraulique 1 comportant à l'avant un maître-cylindre 2 commandé par une pédale d'embrayage 3 et relié par une conduite 4 à un cylindre récepteur 5 d'actionnement de l'embrayage situé à l'arrière du véhicule. Le maître-cylindre 2 est alimenté par un réservoir 7, situé au-dessus du maître-cylindre 2 et contenant du liquide de frein 6 à la pression atmosphérique.

Lorsqu'un conducteur appuie sur la pédale d'embrayage 3, le maître-cylindre 2 repousse le fluide hydraulique 6 en direction du cylindre 5, une butée d'embrayage agissant sur un diaphragme de l'embrayage.

L'effort de poussée transmis au diaphragme entraîne le découplage du moteur par rapport à la boîte de vitesses : il s'agit de l'opération de débrayage. Lorsque le conducteur souhaite à nouveau embrayer, c'est-à-dire coupler le moteur à la boîte de vitesses, il relâche la pédale d'embrayage 3, l'effort de rappel alors exercé par le diaphragme sur le cylindre récepteur 5 tendant à repousser le fluide hydraulique en direction du maître-cylindre 2, les deux cylindres 2, 5 retrouvant donc leur position d'origine, c'est-à-dire leur position de repos. Dans notre exemple, l'embrayage est dans ce cas un embrayage normalement fermé, ce qui signifie qu'en l'absence d'action sur la pédale d'embrayage 3, le moteur 1 est couplé à la boîte de vitesses.

Comme indiqué précédemment, des bulles d'air parviennent à pénétrer dans le circuit hydraulique, en particulier au niveau du cylindre récepteur 5, qui pour les véhicules avec un moteur situé à l'arrière, est localisé à l'arrière du véhicule.

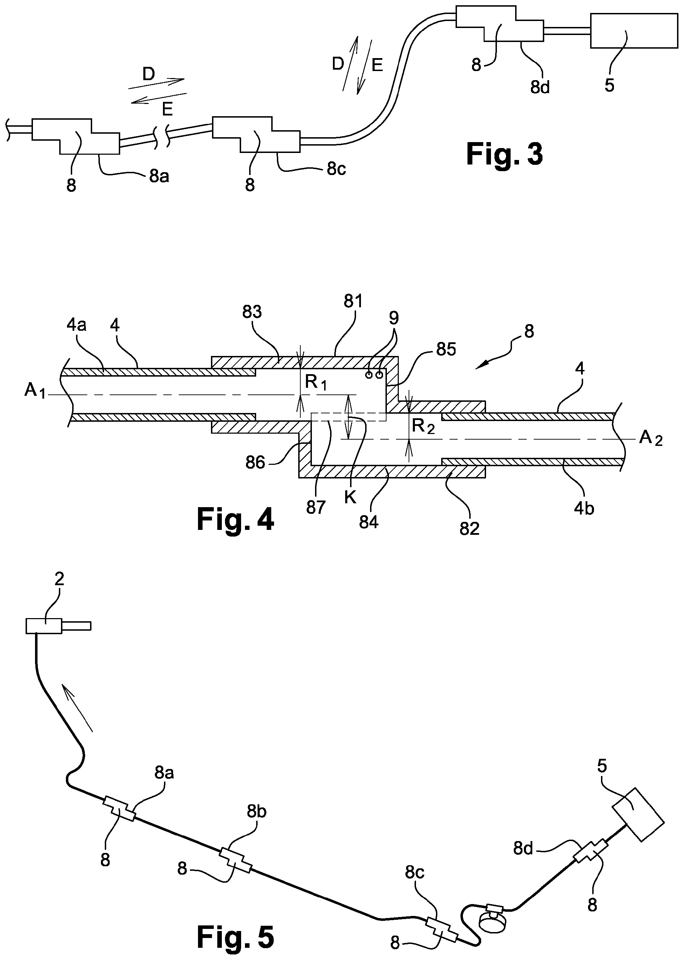

Or, la présence de bulles d'air dans le circuit hydraulique empêche le bon fonctionnement de la commande hydraulique. Il est nécessaire d'évacuer celles-ci pour garantir le bon fonctionnement du système. Cette évacuation ne peut se réaliser que vers le maitre-cylindre 2 et le réservoir 7, elle est réalisée grâce à la succession 8a, 8b, 8c, 8d de dispositifs de désaxages de conduites 8 judicieusement placés sur le circuit 4 du liquide hydraulique 6, comme on peut le voir sur la figure 3. Il n'y a qu'un seul circuit qui relie les dispositifs de désaxage de conduite. Ainsi la circulation dans la conduite se réalise dans les deux sens, comme l'indiquent les flèches D et E de la figure 3.

Les dispositifs de désaxages sont tous identiques. Un exemple unitaire de dispositif de désaxage 8 selon l'invention est montré en figure 4. Le dispositif de désaxage 8 se présente sous forme d'un module qui est placé sur la conduite hydraulique 4, ce module comprend une première et d'une deuxième portion tubulaire de même diamètre, successive, désaxées et communicantes. L'une des portions tubulaires constitue la portion amont 81, l'autre la portion aval 82 de la conduite traversant le dispositif de désaxage. Chaque portion tubulaire présente un rayon R1 et R2, ainsi qu'un axe central de révolution distinct A1, A2 et de même direction. La distance K entre les deux axes est inférieure ou égale à la somme S des rayons R1 et R2 des portions tubulaires amont et aval. Du fait de cette distance limitée entre les deux axes et du fait que les deux axes centraux soient distincts, les deux conduites sont décalées tout en ayant leurs enveloppes tubulaires superposées en partie. Cette superposition partielle des enveloppes tubulaires est caractéristique du dispositif de désaxage et permet de distinguer le dispositif de désaxage 8 d'une simple forme coudée de la conduite hydraulique. Ainsi, la superposition partielle des deux portions tubulaires amont et aval constitue le module de désaxage.

De manière préférentielle, les conduites amont et aval peuvent présenter le même rayon R.

A l'intérieur du dispositif de désaxage, afin que le fluide circule de la portion amont 81 à la portion aval 82, un évidement 87 a été réalisé dans les deux enveloppes des deux portions tubulaires amont 81 et aval 82. Cet évidement 87 est réalisé dans la partie inférieure de l'enveloppe 83 de la conduite amont 81 et dans la partie supérieure de l'enveloppe 84 de la conduite aval 82. Cet évidement 87 est le lieu du désaxage de la conduite, le lieu où les deux conduites se recouvrent, et au travers duquel circule le fluide hydraulique 6. Cet évidement 87 est au moins égal, ou sensiblement plus large que la somme S des rayons R1 et R2 des portions tubulaires amont et aval afin de faciliter le déplacement du fluide hydraulique à l'intérieur du module de désaxage.

Le déplacement du fluide à l'intérieur du dispositif de désaxage, plus particulièrement à l'endroit de l'évidement 87, a une composante orientée suivant le désaxage, à savoir perpendiculairement à la direction longitudinale de la conduite, en raison de la forme du désaxage de la conduite.

Dans le véhicule avec le moteur à l'arrière, les conduites cheminent de l'avant vers l'arrière et ont principalement une composante suivant le plan horizontal. Le désaxage est essentiellement réalisé perpendiculairement à la conduite, suivant la hauteur z.

Comme on le voit sur la figure 4, la portion tubulaire amont 81 prend fin par une surface transversale 85 bordant l'évidement 87 du coté aval. La portion tubulaire avale 82 débute par une surface transversale 86 à la conduite bordant l'évidement 87 du côté amont.

La surface transversale 85 de la conduite amont 81 permet de piéger les bulles d'air 9 du fluide. Les bulles d'air 9 s'entassent à proximité de cette surface. Plus légères, les bulles d'air 9 remontent naturellement, selon la direction du désaxage de conduite et dans le sens de la hauteur, c'est-à-dire vers le haut, au-dessus de l'évidement 87, dans la zone de désaxage, à savoir dans la partie de la conduite amont au-dessus de la conduite aval. Les bulles d'air se logent ensuite au sommet de la conduite amont.

Les bulles sont emprisonnées par la surface transversale 85 d'arrêt de la portion de la conduite amont 81 et restent du côté amont de l'évidement. Elles ne peuvent plus effectuer de déplacement en direction du cylindre récepteur car elles sont maintenues par la surface transversale d'arrêt 85 de la conduite amont. Elles sont de plus maintenues dans la conduite amont car celle-ci est plus haute que la conduite aval, en raison du désaxage en hauteur, ce qui crée un effet de seuil. A l'occasion du déplacement du fluide 6 à l'intérieur de la conduite 4 lors de l'appui sur la pédale suivant le sens D, le fluide hydraulique 6 se déplace de la pédale 3 vers le récepteur 5 et les bulles d'air présentes dans le circuit sont piégées par la surface transversale 85 de la conduite amont, et ne se déplacent pas plus en direction du récepteur 5.

En revanche, lorsque l'on relâche la pédale d'embrayage 3, les bulles d'air suivent le déplacement du fluide dans le sens E et sont envoyées en direction de l'amont, celles-ci n'ont pas à franchir de seuil en hauteur et se déplacent sur une distance équivalente au volume de liquide déplacé, elles franchissent les distances séparant plusieurs modules de désaxage 8 et se retrouvent progressivement piégées par un nouveau dispositif de désaxage. Elles remontent ainsi progressivement toute la conduite hydraulique grâce au jeu des appuis sur la pédale d'embrayage, avec étape sur les dispositifs de désaxage présents sur le parcours.

Comme visible sur la figure 4, le dispositif de désaxage de conduite 8 est relié en amont avec la portion de conduite 4a provenant de la pédale et du maître-cylindre et en aval avec la portion de conduite 4b provenant du récepteur d'embrayage. Par amont, il faut entendre que la portion de conduite provenant de la pédale et du maître-cylindre est plus haute que la portion de conduite provenant du récepteur d'embrayage. La connexion entre le dispositif de désaxage et la portion de conduite hydraulique provenant de la pédale s'effectue par insertion de la conduite à l'intérieur de la portion amont de la conduite du module de désaxage, il en est de même pour la connexion entre la portion de conduite hydraulique provenant du cylindre récepteur et la portion aval de la conduite du dispositif de désaxage.

Dans le mode de réalisation de la figure 5, la conduite hydraulique comprend au moins deux modules de désaxages successifs 8a, 8b dans un même plan longitudinal du véhicule, cela concerne en particulier les dispositifs de désaxage situés dans la zone plane sous caisse. Une légère pente est alors prévue entre les dispositifs, le dispositif situé à proximité de la pédale est situé plus haut que le dispositif situé à proximité du récepteur d'embrayage.

Selon la longueur de la conduite hydraulique, celle-ci peut comprendre au moins trois ou quatre modules de désaxage successifs 8a, 8b, 8c et 8d. Dans ce cas, la portion de conduite reliant deux modules de désaxages successifs 8a, 8b, 8c, 8d comprend un volume de fluide hydraulique 6 compris entre 70 et 90 % du volume de fluide hydraulique 6 déplacé lors de l'appui de la pédale 3. Un tel volume permet aux bulles d'air de remonter au moins une portion séparant deux modules à l'occasion d'un appui/relâchement sur la pédale.

Compte tenu du diamètre de la conduite, usuellement d'environ 3 à 4 mm, la longueur de portion de conduite entre deux modules de désaxage successifs 8a, 8b, 8c, 8d est sensiblement comprise entre 400mm et 600 mm.

Le fonctionnement de ce dispositif de commande va maintenant être décrit en détail :
L'appui sur la pédale d'embrayage 3 entraine le déplacement du liquide depuis la pédale 3 vers le récepteur d'embrayage 5. A l'intérieur du dispositif de désaxage, les bulles d'air 9 restent emprisonnées par la surface transversale 85 d'arrêt de la conduite amont 81 pendant que le liquide s'écoule depuis la conduite amont 81 vers la conduite aval 82.

Lors du relâchement de la pédale, le liquide hydraulique se déplace du cylindre récepteur 5 vers la pédale 3. Les bulles d'air 9 n'ayant pas de seuil à franchir dans ce sens, se déplacent depuis leur logement temporaire vers la pédale. Une action sur la pédale permet de déplacer un volume égal ou supérieur au liquide stocké dans la conduite entre deux dispositifs de désaxage. Lors du relâchement de la pédale, les bulles d'air 9 se déplacent au minimum d'une distance séparant deux dispositifs de désaxage 8. Elles remontent ainsi progressivement la conduite jusqu'au premier dispositif de désaxage placé sur la conduite en partant du maitre-cylindre. Celui-ci est situé en dessous du réservoir et lors d'un dernier appui/relâchement de la pédale, celles-ci remontent jusqu'au réservoir 7 naturellement ou elles sont ensuite évacuées.

L'invention propose ainsi un dispositif de commande hydraulique d'un embrayage permettant l'évacuation des bulles d'air lors de son fonctionnement, de manière simple et efficace. On garantit ainsi que les bulles d'air présentes dans la conduite de liaison quelle que soit leur position, sont amenées en amont de la conduite hydraulique, jusqu'au réservoir où celles-ci sont alors évacuées grâce aux actions successives d'embrayage /débrayage.

## Revendications

1. Dispositif de commande hydraulique d'un embrayage pour véhicule automobile (1), comportant un maître-cylindre (2) commandé par une pédale d'embrayage (3), des moyens d'alimentation du maitre-cylindre (2) en fluide hydraulique (6), un cylindre récepteur d'actionnement de l'embrayage (5), le maitre-cylindre (2) étant relié au cylindre récepteur d'actionnement (5) au moyen d'une conduite hydraulique (4), le récepteur d'actionnement d'embrayage (5) est apte à être positionné à l'arrière du véhicule et la pédale (3) et le maître-cylindre (2) sont aptes à être placés à l'avant du véhicule et
**caractérisé en ce que** la conduite hydraulique (4) apte à relier l'arrière à l'avant du véhicule comporte une pluralité (8a, 8b, 8c, 8d) de dispositifs de désaxage de conduite (8) le long de son parcours, chacun dédit dispositif de désaxage de conduite (8) étant destiné à piéger les bulles d'air présentes dans la conduite hydraulique, chaque dispositif de désaxage (8) étant composé d'une portion tubulaire amont (81) et d'une portion tubulaire aval (82) successive et communicante, chaque portion tubulaire présentant un rayon (R1, R2) et un axe central (A1, A2) distinct et de même direction, la distance (K) entre les deux axes centraux des portions tubulaires étant inférieure à la somme (S) des rayons (R1, R2) des portions tubulaires amont (81) et aval (82) successives de manière à ce que les enveloppes (83, 84) des portions tubulaires présentent une zone de recouvrement. et ladite pluralité de dispositifs de désaxage de conduite (8a, 8b, 8c, 8d) étant destinée à favoriser la remontée des bulles d'air jusqu'au moyen d'alimentation (7) du maitre-cylindre (2) en fluide hydraulique (6)

2. Dispositif de commande hydraulique d'un embrayage pour véhicule automobile (1) selon la revendication précédente **caractérisé en ce que** les deux portions tubulaires (81, 82) du dispositif de désaxage communiquent au moyen d'un évidement commun (87) réalisé dans une partie inférieure de l'enveloppe (83) de la portion tubulaire amont (81) et dans la partie supérieure de l'enveloppe (84) de la portion tubulaire aval (82), au travers duquel circule le fluide hydraulique (6).

3. Dispositif de commande hydraulique d'un embrayage pour véhicule automobile (1) selon la revendication précédente **caractérisé en ce que** l'évidement (87) présente une largeur supérieure ou égale à la somme (S) des rayons (R1, R2) des portions tubulaires amont (81) et aval (82).

4. Dispositif de commande hydraulique d'un embrayage pour véhicule automobile (1) selon l'une quelconque des revendications précédentes **caractérisé en ce que** la conduite hydraulique (4) comporte au moins deux dispositifs de désaxages successifs (8a, 8b) dans un même plan longitudinal du véhicule, le dispositif de désaxage situé à proximité de la pédale étant plus haut que le dispositif situé à proximité du cylindre récepteur.

5. Dispositif de commande hydraulique d'un embrayage pour véhicule automobile (1) selon l'une quelconque des revendications précédentes comprenant au moins trois dispositifs de désaxages successifs (8a, 8b, 8c, 8d).

6. Dispositif de commande hydraulique d'un embrayage pour véhicule automobile (1) selon l'une quelconque des revendications précédentes comprenant au moins quatre dispositifs de désaxages successifs (8a, 8b, 8c, 8d).

7. Dispositif de commande hydraulique d'un embrayage pour véhicule automobile (1) selon l'une quelconque des revendications précédentes **caractérisé en ce que** la portion de conduite reliant deux dispositifs de désaxages successifs (8a, 8b, 8c, 8d) comprend un volume de fluide hydraulique (6) compris entre 70 et 90 % du volume de fluide hydraulique (6) déplacé lors de l'appui de la pédale (3).

8. Dispositif de commande hydraulique d'un embrayage pour véhicule automobile (1) selon l'une quelconque des revendications précédentes **caractérisé en ce qu'**il comprend une longueur de portion de conduite entre deux modules de désaxage successifs comprise entre 400mm et 600 mm.

9. Véhicule comprenant un dispositif de conduite hydraulique d'un embrayage (1) selon l'une quelconque des revendications précédentes

## Patentansprüche

1. Vorrichtung zur hydraulischen Steuerung einer Kupplung für ein Kraftfahrzeug (1), die einen durch ein Kupplungspedal (3) gesteuerten Geberzylinder (2), Versorgungseinrichtungen zur Versorgung des Geberzylinders (2) mit Hydraulikfluid (6) und einen Nehmerzylinder zur Betätigung der Kupplung (5) beinhaltet, wobei der Geberzylinder (2) mit dem Betätigungsnehmerzylinder (5) mittels einer Hydraulikleitung (4) verbunden ist, wobei der Kupplungsbetätigungsnehmer (5) geeignet ist, im hinteren Teil des Fahrzeugs angeordnet zu werden, und das Pedal (3) und der Geberzylinder (2) geeignet sind, im vorderen Teil des Fahrzeugs angeordnet zu werden, **dadurch gekennzeichnet, dass** die Hydraulikleitung (4), die geeignet ist, den hinteren mit dem vorderen Teil des Fahrzeugs zu verbinden, eine Mehrzahl (8a, 8b, 8c, 8d) von Leitungsachsversatzvorrichtungen (8) entlang ihres Verlaufs beinhaltet, wobei jede der Leitungsachsversatzvorrichtungen (8) dazu bestimmt ist, die in der Hydraulikleitung vorhandenen Luftblasen zu fangen, wobei jede Achsversatzvorrichtung (8) aus einem stromaufwärtigen rohrförmigen Abschnitt (81) und aus einem darauf folgenden und kommunizierenden stromabwärtigen rohrförmigen Abschnitt (82) besteht, wobei jeder rohrförmige Abschnitt einen Radius (R1, R2) und eine Mittelachse (A1, A2) aufweist, die verschieden und gleich gerichtet sind, wobei der Abstand (K) zwischen den beiden Mittelachsen der rohrförmigen Abschnitte kleiner als die Summe (S) der Radien (R1, R2) der stromaufwärtigen (81) und stromabwärtigen (82) rohrförmigen Abschnitte ist, so dass die Mäntel (83, 84) der rohrförmigen Abschnitte einen Überlappungsbereich aufweisen, und die Mehrzahl von Leitungsachsversatzvorrichtungen (8a, 8b, 8c, 8d) dazu bestimmt ist, das Wiederaufsteigen der Luftblasen bis zur Versorgungseinrichtung (7) zur Versorgung des Geberzylinders (2) mit Hydraulikfluid (6) zu begünstigen.

2. Vorrichtung zur hydraulischen Steuerung einer Kupplung für ein Kraftfahrzeug (1) nach dem vorhergehenden Anspruch, **dadurch gekennzeichnet, dass** die beiden rohrförmigen Abschnitte (81, 82) der Achsversatzvorrichtung mittels eines gemeinsamen Raums (87) kommunizieren, der im unteren Teil des Mantels (83) des stromaufwärtigen rohrförmigen Abschnitts (81) und im oberen Teil des Mantels (84) des stromabwärtigen rohrförmigen Abschnitts (82) ausgeführt ist, durch den hindurch das Hydraulikfluid (6) fließt.

3. Vorrichtung zur hydraulischen Steuerung einer Kupplung für ein Kraftfahrzeug (1) nach dem vorhergehenden Anspruch, **dadurch gekennzeichnet, dass** der Raum (87) eine Breite aufweist, die größer oder gleich der Summe (S) der Radien (R1, R2) der stromaufwärtigen (81) und stromabwärtigen (82) rohrförmigen Abschnitte ist.

4. Vorrichtung zur hydraulischen Steuerung einer Kupplung für ein Kraftfahrzeug (1) nach einem der vorhergehenden Ansprüche, **dadurch gekennzeichnet, dass** die Hydraulikleitung (4) mindestens zwei aufeinander folgende Achsversatzvorrichtungen (8a, 8b) in derselben Längsebene des Fahrzeugs beinhaltet, wobei die in der Nähe des Pedals gelegene Achsversatzvorrichtung weiter oben als die in der Nähe des Nehmerzylinders gelegene Vorrichtung angeordnet ist.

5. Vorrichtung zur hydraulischen Steuerung einer Kupplung für ein Kraftfahrzeug (1) nach einem der vorhergehenden Ansprüche, die mindestens drei aufeinander folgende Achsversatzvorrichtungen (8a, 8b, 8c, 8d) umfasst.

6. Vorrichtung zur hydraulischen Steuerung einer Kupplung für ein Kraftfahrzeug (1) nach einem der vorhergehenden Ansprüche, die mindestens vier aufeinander folgende Achsversatzvorrichtungen (8a, 8b, 8c, 8d) umfasst.

7. Vorrichtung zur hydraulischen Steuerung einer Kupplung für ein Kraftfahrzeug (1) nach einem der vorhergehenden Ansprüche, **dadurch gekennzeichnet, dass** der zwei aufeinander folgende Achsversatzvorrichtungen (8a, 8b, 8c, 8d) verbindende Leitungsabschnitt ein Hydraulikfluidvolumen (6) umfasst, das zwischen 70 und 90 % des beim Treten des Pedals (3) verdrängten Hydraulikvolumens (6) beträgt.

8. Vorrichtung zur hydraulischen Steuerung einer Kupplung für ein Kraftfahrzeug (1) nach einem der vorhergehenden Ansprüche, **dadurch gekennzeichnet, dass** sie eine Leitungsabschnittslänge zwischen zwei aufeinander folgenden Achsversatzmodulen zwischen 400 mm und 600 mm umfasst.

9. Kraftfahrzeug mit einer Vorrichtung zur hydraulischen Steuerung einer Kupplung (1) nach einem der vorhergehenden Ansprüche.

## Claims

1. Device for hydraulic control of a clutch for a motor vehicle (1), comprising a master cylinder (2) controlled by a clutch pedal (3), means for supplying the master cylinder (2) with hydraulic fluid (6), a slave cylinder for actuation of the clutch (5), the master cylinder (2) being linked to the actuating slave cylinder (5) by means of a hydraulic pipe (4), the slave cylinder for actuation of the clutch (5) being able to be positioned in the rear of the vehicle and the pedal (3) and the master cylinder (2) being able to be placed at the front of the vehicle and **characterized in that** the hydraulic pipe (4) able to link the rear to the front of the vehicle comprises a plurality (8a, 8b, 8c, 8d) of pipe offset devices (8) along its length, each of said pipe offset devices (8) being designed to trap the air bubbles present in the hydraulic pipe, each offset device (8) being composed of an upstream tubular portion (81) and a downstream tubular portion (82), which are successive and in communication, each tubular portion having a radius (R1, R2) and a separate central axis (A1, A2) in the same direction, the distance (K) between the two central axes of the tubular portions being less than the sum (S) of the radii (R1, R2) of the successive upstream (81) and downstream (82) tubular portions so that the outer surfaces (83, 84) of the tubular portions have an overlapping area and said plurality of pipe offset devices (8a, 8b, 8c, 8d) being designed to promote the rising of air bubbles as far as the means for supplying (7) the master cylinder (2) with hydraulic fluid (6).

2. Device for hydraulic control of a clutch for a motor vehicle (1) as claimed in the preceding claim, **characterized in that** the two tubular portions (81, 82) of the offset device communicate by means of a common recess (87) formed in a lower part of the outer surface (83) of the upstream tubular portion (81) and in the upper part of the outer surface (84) of the downstream tubular portion (82), via which the hydraulic fluid (6) circulates.

3. Device for hydraulic control of a clutch for a motor vehicle (1) as claimed in the preceding claim, **characterized in that** the recess (87) has a width which is greater than or equal to the sum (S) of the radii (R1, R2) of the upstream (81) and downstream (82) tubular portions.

4. Device for hydraulic control of a clutch for a motor vehicle (1) as claimed in any one of the preceding claims, **characterized in that** the hydraulic pipe (4) comprises at least two successive offset devices (8a, 8b) in the same longitudinal plane of the vehicle, the offset device located in the vicinity of the pedal being higher than the device located in the vicinity of the slave cylinder.

5. Device for hydraulic control of a clutch for a motor vehicle (1) as claimed in any one of the preceding claims, comprising at least three successive offset devices (8a, 8b, 8c, 8d).

6. Device for hydraulic control of a clutch for a motor vehicle (1) as claimed in any one of the preceding claims, comprising at least four successive offset devices (8a, 8b, 8c, 8d).

7. Device for hydraulic control of a clutch for a motor vehicle (1) as claimed in any one of the preceding claims, **characterized in that** the pipe portion connecting two successive offset devices (8a, 8b, 8c, 8d) comprises a volume of hydraulic fluid (6) of between 70 and 90% of the volume of hydraulic fluid (6) displaced when pressing on the pedal (3).

8. Device for hydraulic control of a clutch for a motor vehicle (1) as claimed in any one of the preceding claims, **characterized in that** it comprises a length of pipe portion between two successive offset modules of between 400 mm and 600 mm.

9. Vehicle comprising a device for hydraulic control of a clutch (1) as claimed in any one of the preceding claims.
